# EUROPEAN PATENT APPLICATION

(11) **EP 4 678 252 A1**
(43) Date of publication of application: **14.01.2026**
(21) Application number: 24306165.2
(22) Date of filing: 10.07.2024
(51) Int. Cl.: A63F 13/213, G06F 3/01, G06T 13/40, G06T 19/20

(54) **AVATAR PHYSICAL MODEL SIGNALING IN SCENE DESCRIPTION**

(71) Applicant: InterDigital CE Patent Holdings, SAS, 75017 Paris (FR)
(72) Inventor: GOSSELIN, Philippe Henri, 35235 THORIGNE-FOUILLARD (FR); COVA REGATEIRO, João Pedro, 35220 CHATEAUBOURG (FR); LE CLERC, Francois, 35590 L'HERMITAGE (FR)
(74) Representative: Vossius & Partner Patentanwälte Rechtsanwälte mbB

(57) **Abstract**

Some embodiments of a method may include: obtaining a first avatar model corresponding to a first avatar; obtaining physical properties of the first avatar model; and rendering, in a virtual environment, the first avatar using the first avatar model and the physical properties of the first avatar model. Some embodiments of the method may further include obtaining a mapping of physical properties of the user to the first avatar, wherein rendering the first avatar further uses the mapping of physical properties.

## Description

### INCORPORATION BY REFERENCE

The present application incorporates by reference in their entirety the following applications: European Patent Application Serial No. 24315153.7, entitled "AVATAR METADATA FORMAT" and filed April 11, 2024 (‴153 application"); European Patent Application Serial No. EP24305542, entitled "AVATAR MAPPING USING A GENERIC REGISTRATION SCHEMA" and filed April 5, 2024 ("`542 application"); European Patent Application Serial No. EP24305521, entitled "CARRIAGE FORMAT FOR AVATAR MAPPING AND ANIMATION" and filed April 4, 2024 ("`521 application"); and European Patent Application Serial No. EP24305094, entitled "AVATAR JSON INTERCHANGE FILE FORMAT" and filed January 15, 2024 (‴094 application").

### BACKGROUND

A user may be represented by an avatar in a virtual word. The user may control the avatar using different devices, like a mouse, a gamepad, etc. Some control devices may be related to the body of a user: for instance, a webcam may be used to detect movements of the user, which may be translated into movements of the avatar. AR/VR devices may also be used to capture user movements, like gloves or helmets with cameras and sensors. In many cases, these devices are able to capture the movements of any user: the result may not be very accurate, since the result is usually based on an average representation of user physical specificities.

### SUMMARY

An example method in accordance with some embodiments may include: obtaining a first avatar model corresponding to a first avatar; obtaining one or more physical properties of a user; and rendering, in a virtual environment, the first avatar using the first avatar model and the one or more physical properties of the user.

Some embodiments of the example method may further include calibrating a capture device using the physical properties and the first avatar model.

For some embodiments of the example method, obtaining physical properties of the user comprises capturing, using a capture device, at least one of the physical properties of the user.

Some embodiments of the example method may further include obtaining a mapping of physical properties of the user to the first avatar, wherein rendering the first avatar further uses the mapping of physical properties.

Some embodiments of the example method may further include obtaining a body model corresponding to the user, wherein rendering the first avatar further uses the body model.

Some embodiments of the example method may further include: obtaining a second avatar model corresponding to a second avatar; and rendering, in a virtual environment, the second avatar using the second avatar model and the body model.

Some embodiments of the example method may further include: obtaining a first set of connection data correlating the first avatar model to the body model; and obtaining a second set of connection data correlating the second avatar model to the body model, wherein rendering the first avatar further uses the first connection data, and wherein rendering the second avatar further uses the second connection data.

For some embodiments of the example method, the physical properties of the body model comprise at least one of weight and body mass of at least one body part of the user.

For some embodiments of the example method, the physical properties of the body model comprise a physical body property of at least one body part of the user.

For some embodiments of the example method, the physical properties of the body model comprise a skeletal limit of at least one body part of the user.

For some embodiments of the example method, the physical properties of the body model comprise a joint limit of at least one body joint of the user.

For some embodiments of the example method, the physical properties of the body model comprise a translation limit of at least one body part of the user.

For some embodiments of the example method, the physical properties of the body model comprise a scale limit of at least one body part of the user.

For some embodiments of the example method, at least one of the first avatar model and the second avatar model complies with at least one of the group of formats consisting of Avatar JSON Interchange File (AJIF), Graphics Library Transmission Format (gITF), Universal Scene Description (USD), Filmbox (FBX), Polygon File Format (PLY), Wavefront Object (OBJ), DNA, and an MPEG_node_avatar-based format.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 1D is a schematic plan view illustrating example relationships of extended reality scene description objects according to some embodiments.
FIG. 2 is a process diagram illustrating an example processing of avatar data according to some embodiments.
FIG. 3 is a process diagram illustrating an example processing of avatar data using avatar metadata information as an input and an output of the codec according to some embodiments.
FIG. 4 is a flowchart illustrating an example process for rendering physical properties of an avatar according to some embodiments.
FIG. 5 is a flowchart illustrating an example process for capturing physical properties of an avatar according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

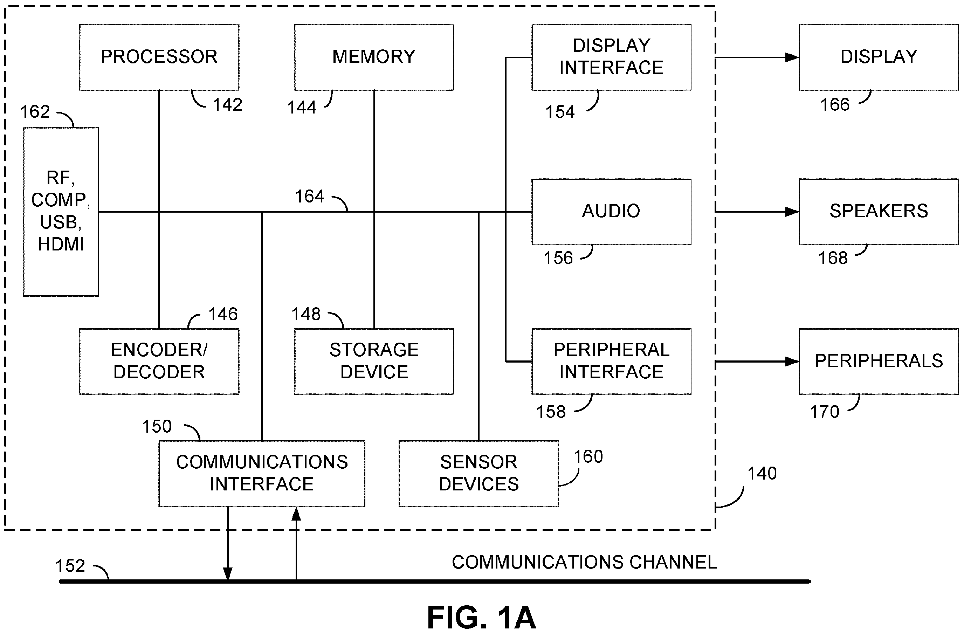

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

### Scene Description Framework for XR

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

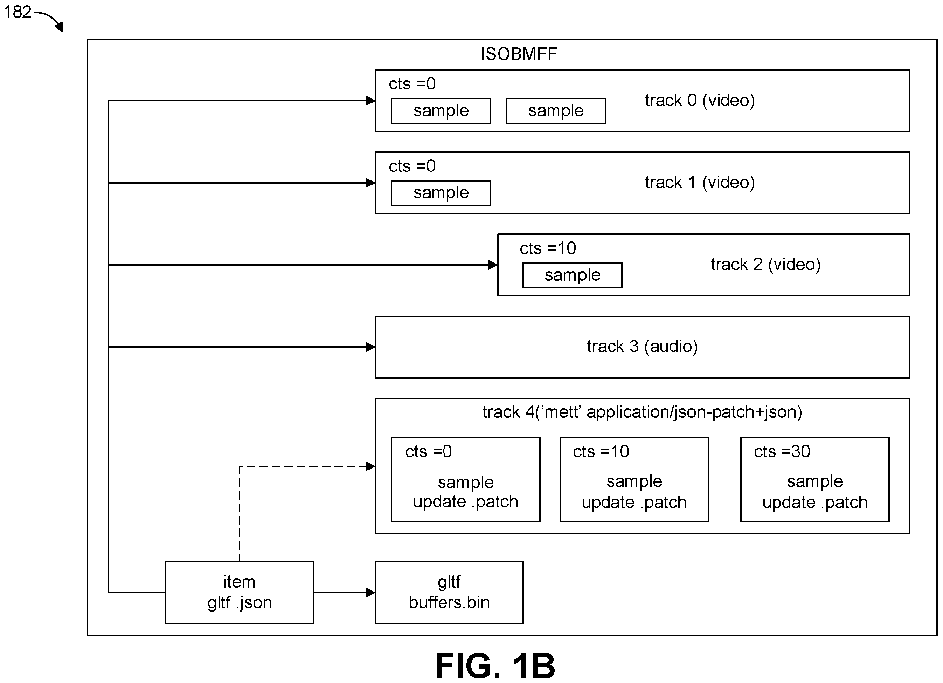

FIG. 1B is a system diagram illustrating an example set of interfaces for a scene description (stored as an item in gITF.json), three video tracks, an audio track, and a JSON patch update track in an ISOBMFF file 182 according to some embodiments.

### Runtime Interactivity

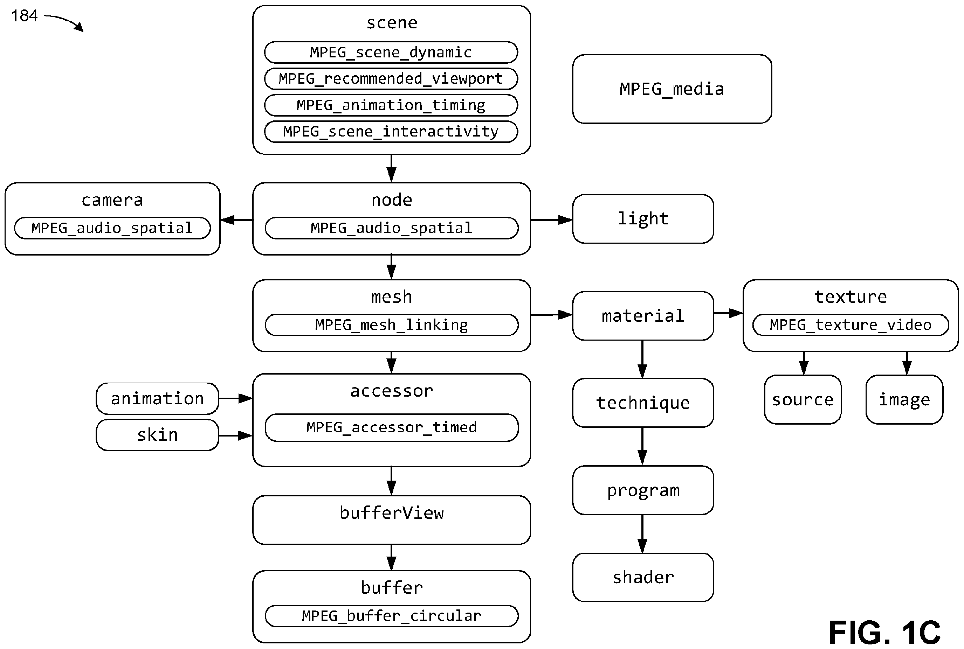

FIG. 1C is a system diagram illustrating an example set of interfaces for an MPEG-I node hierarchy 184 supporting elements of scene interactivity according to some embodiments.

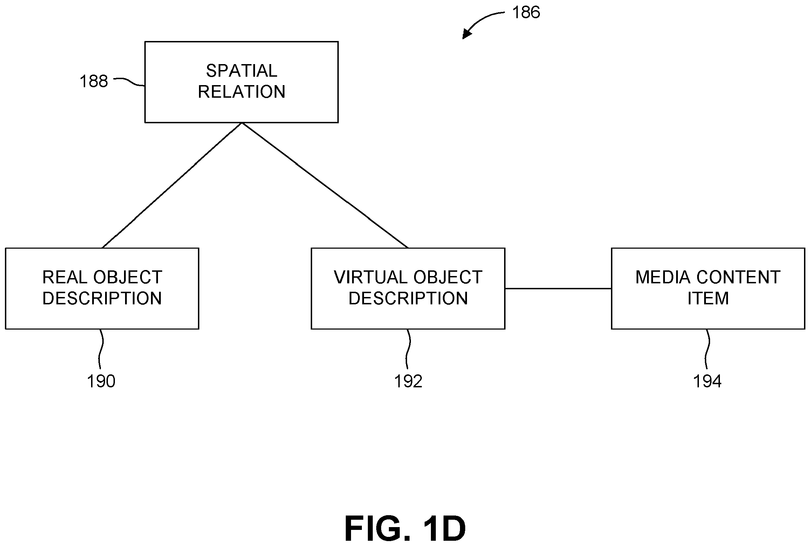

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 (*"MPEG Extension*")*.*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

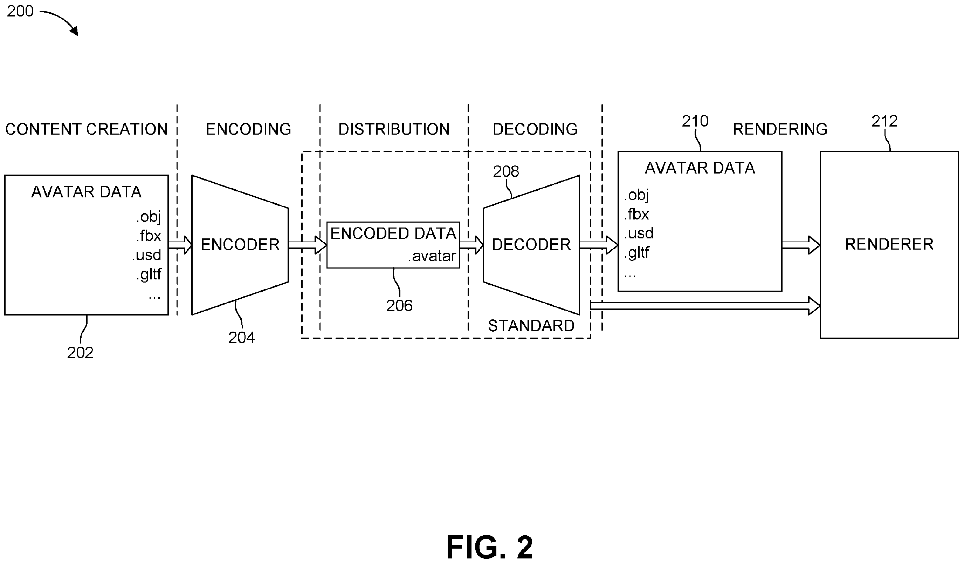

FIG. 2 is a process diagram illustrating an example processing of avatar data according to some embodiments. With the considerable increase in activity related to XR/VR and the metaverse in general, a standardization effort on the avatar subject is starting in MPEG. The intent is to facilitate distribution and ensure interoperability between the different devices, tools, and platforms. This process may typically result in the definition of a new standardized format dedicated to avatars.

As illustrated in the process 200 of FIG. 2, such a format may be used for encoding avatar data 202 from various sources, including existing 3D formats (e.g., .obj, .fbx, .usd, .gltf). An encoder 204 may generate encoded data 206 in this dedicated format. The encoded data 206 may be sent to a decoder 208 to be decoded into another format of avatar data 210 or directly rendered by a renderer 212 after decoding. For some embodiments, a standardization process, for example, focuses on the encoded format and the decoding process.

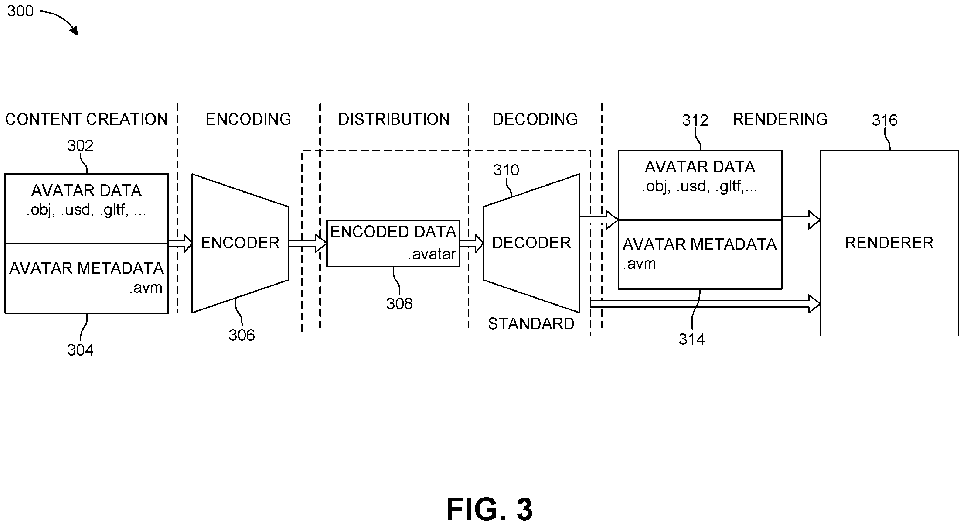

FIG. 3 is a process diagram illustrating an example processing of avatar data using avatar metadata information as an input and an output of the codec according to some embodiments. As shown in the process 300 of FIG. 3, which is in a standardization context, avatar metadata 304, 314 in such a format may be used both as an input and an output of the codec.

The format may be used as an input format of the encoder 306. The format indicates what features are to be encoded, and the format allows the encoder to access the information from one or more companion avatar files. Avatar metadata 304 may be combined with avatar data 302 and encoded by the encoder 306.

The metadata format may be used as an output of the decoder 310. The metadata 314 is extracted from the decoded data and associated with one or more companion files containing the actual avatar data 312. The encoded data 308 may be sent to a decoder 310 to be decoded into another format of avatar data 312 or directly rendered by a renderer 316 after decoding.

In a metaverse context, if an avatar streaming platform supports multiple avatar formats, this metadata format can be used on a server to detail the different avatar representation available for a given user for instance. This metadata information may be used upon request to indicate to a client what data each of the avatar representations contains. The client may then use the information to request the (proper) data.

An example method in accordance with some embodiments may include: obtaining encoded avatar data; decoding the encoded data to generate decoded avatar data; splitting the decoded avatar data into avatar content data and avatar metadata; determining a first format of the avatar content data using the avatar metadata; converting the avatar content data from the first format to a second format; and rendering the converted avatar content data.

This application describes avatar encoding for 3D scene representations and the encoding of a physical model corresponding to the user of an avatar. This physical model may have many uses, such as matching of the user body and an avatar for animation from physical sensors.

The current MPEG-I Scene Description (SD) format using the MPEG_node_avatar extension allows the definition of an avatar model. Thanks to these features, applications may know which mesh is an avatar. For instance, if the avatar is a usual human body mesh, an application may place the avatar in a scene, and let the user move the avatar in the world. The AJIF format, introduced in the '094 application, also may encode an avatar model.

An avatar model is, by definition, always related to a user. The user may be represented by an avatar in a virtual word. The user may control the avatar using different devices, like a mouse, a gamepad, etc. Some control devices may be related to the body of a user: for instance, a webcam may be used to detect movements of the user, which may be translated into movements of the avatar. AR/VR devices may also be used to capture user movements, like gloves or helmets with cameras and sensors. In many cases, these devices are able to capture the movements of any user: the result may not be very accurate, since the result is usually based on an average representation of user physical specificities.

Most capture devices also may be calibrated for a specific user. The calibration usually requires a dedicated stage where the user has to perform some specific moves to help the device, so that the device may better recognize the movements. In order to increase the quality and accuracy of the avatar movements, a calibration step also may be run, considering the avatar model, increasing even more the final purpose of these devices, which is to control the avatar using user movements.

These methods require user intervention, and thus cannot be run automatically. Furthermore, they are limited to the scope of data the device may capture. For instance, an application cannot get an accurate 3D model with a usual color webcam. Some embodiments may allow an automatic and accurate device calibration to provide the 3D model of the user: the physical properties of the body of the user allow the simulation, which may reproduce the calibration procedures, without the intervention of the user. Such models (limited to geometry) may be encoded into a scene description format (like gITF), but there is no known solution to embed the avatar and the model of its user in a single container: For such scenarios, the application must perform the connection or ask the user which avatar goes with which physical body model. Furthermore, additional physical properties may help the calibration, like the weight or the suppleness of the user.

The context is the one of avatar interoperability, where a user possesses an avatar encoded into one or more files (preferably gITF or AJIF). The avatar files should contain everything an application needs to implement the expected features. The application must not have to provide extra data or make choices about possible setups.

This application relates to the user body model, which contains a 3D representation of the user with physical properties like weight or suppleness. The body model must contain enough information for the calibration of a capture device. The information required depends on the device. The avatar provider, which encodes the avatar and the user body model, must collect all the information the capture device requires. Within this information, matching properties between the avatar and body model may also be required.

For some embodiments, the problem is to ensure that the follow information may be signaled: (1) the avatar model; (2) the user body model with physical properties like weight or suppleness; and (3) the connection between the avatar model and the user body model. For some embodiments, a solution to the main problem presented may solve the problem of signaling the physical properties of the avatar model (with or without the signaling of the user body model).

For instance, a use case may be an avatar model instantiated in a virtual environment platform containing a physics engine. A user wanting to have an avatar that is a faithful representation of him- or herself may also want the avatar to have the same physical properties as him- or herself, especially the body part weights, so that the avatar faithfully reacts to gravity and external forces. For some embodiments of this use case, the avatar model is not limited to geometry but also encompasses physics.

Some embodiments may use the formats discussed herein: AJIF and gITF. Other embodiments may use other scene description formats (like USD and FBX, among others). For some embodiments, avatar data formats may include Avatar JSON Interchange File (AJIF), Graphics Library Transmission Format (gITF), Universal Scene Description (USD), Filmbox (FBX), Polygon File Format (PLY), Wavefront Object (OBJ), and DNA.

Some embodiments are based on the encoding of two categories of models: (1) avatar models, which contain the data required to use the avatar in usual use cases; and (2) physical body models, which contain a 3D representation of the user. The encoding of avatar models may be done with technologies such as glTF with MPEG_node_avatar. Many physical body models, like the geometry or the skinning, may be encoded using existing technologies. Specific physical properties, however, require new solutions. A generic embodiment of these physical properties is discussed below.

If there is only one avatar in a scene description format (like AJIF), there is no need to encode the correspondence between avatar models and a physical body model.

If a format encodes more than one avatar (like gITF), the correspondence between each avatar model and the corresponding body model is encoded. For instance, in the following gITF embodiments, a "physicalModel" property in a "MPEG_node_avatar" signals the body model of the avatar model of the current node.

Mapping between avatar models and body models may be signaled using the "MPEG_avatar_mapping" extension, which was introduced in the `542 application and which presents embodiments for gITF. For AJIF, a new "physicalMapping" mapping in the LOD property may be used.

### Signaling with AJIF

The AJIF format was introduced in the '094 application. In the AJIF format, the user body model properties are signaled in the "metadata" root property, and the avatar models in the "lods" root property (one avatar model per level of detail). Since the AJIF format encodes a single avatar for a single user, there is no need to signal the connection between the user body model and the avatar models for some embodiments.

### Metadata

The metadata root properties are extended with the new "physicalMesh", "physicalSkeletons" and "physicalProperties" properties. Table 1 shows the AJIF metadata property with these new properties included.

**Table 1.**

| **Name** | **Type** | **Description** | **Required** |
|---|---|---|---|
| name | string | Avatar name. | No |
| id | string | Avatar identifier. | No |
| age | int | Avatar age. | No |
| gender | string | Avatar gender. | No |
| physicalMesh | integer | Node index with a mesh for the physical model. | No |
| physicalSkeletons | integer[1-*] | Node indexes with skeletons for the physical model. | No |
| physical Properties | Physical Properties | Physical properties. | No |

The "physicalMesh" property references a node in the "nodes" root list. The referenced node must define a mesh that models the user body. The "physicalSkeletons" property references nodes in the "nodes" root list. Each referenced node must define a skeleton for the user body. The "physicalProperties" property contains the physical body properties.

### Levels of Detail (LOD)

Matching of properties between the avatar model of each LOD with the physical model may be signaled through the addition of a new "physicalMapping" property in the LOD property. Table 2 shows the AJIF LOD property with this new property included.

**Table 2.**

| **Name** | **Type** | **Description** | **Required** |
|---|---|---|---|
| name | string | LOD name. | No |
| lod | integer | Indicates the level of details. Lower values correspond to higher level of details. | No, default to 0 |
| mesh | integer | References a node in the *"nodes"* collection. | No |
| skeletons | integer[1-*] | List of references to skeletons in the *"skeletons"* collection. | No |
| controllers | integer[1-*] | List of references to controllers in the "*controllers*" collection. | No |
| physicalMapping | mapping | Mapping with the physical body model. | No |

The "physicalMapping" property contains the mapping data, as defined in the `542 application.

In some embodiments, a "physicalProperties" property of type *PhysicialProperties* signals the physical properties of the avatar models. This property may be used in the virtual environment to better animate or use the avatar model.

### Signaling with gITF

For some embodiments, the glTF format may be followed and the format may be compatible with the recent MPEG-I SD standard. The main idea of this embodiment is to include at least two nodes in a glTF file with a "MPEG_node_avatar" extension. A first node, where "isAvatar" equals true, contains the avatar and points to a node with the physical model. A second node, where "isAvatar" equals false, contains the physical model, as well as properties of the physical model.

Matching of properties between the avatar model and the physical model may be signaled using the "MPEG_avatar_mapping" extension, which was introduced in the `542 application.

### MPEG_node_avatar

The existing "MPEG_node_avatar" extension (*Information Technology -Coded Representation* of *Immersive Media, Part 14: Scene Description,* ISO/IEC 23090-14:2023(E), October 2023) is extended with new "physicalModel" and "physicalProperties" properties. Table 3 shows the MPEG_node_avatar property with these new properties included.

**Table 3.**

| **Name** | **Type** | **Description** | **Required** |
|---|---|---|---|
| isAvatar | boolean | If true, this node contains the root of an avatar mesh. | Yes |
| type | string | The type of the Avatar representation is provided as a URN. | Yes |
| mappings | AvatarMapping[1 *] | The mapping between child nodes and semantics. | Yes |
| physicalModel | integer | Node index with the physical model. | No |
| physical Properties | Physical Properties | Physical properties. | No |

The "physicalModel" property references a node in the gITF "nodes" root list. This node defines a physical model. If this property is present, the "isAvatar" must equal *true* (e.g., the node is an avatar). The referenced node must have a "MPEG_node_avatar" extension where property "isAvatar" equals *false* (e.g., the referenced node is not an avatar). The referenced node may have a "physicalProperties" property.

The "physicalProperties" contains properties about a physical body. If this property is present, the "isAvatar" boolean should be *false.* In some embodiments, the "isAvatar" boolean may be *true,* if the signaling of physical properties of an avatar is required.

### Signaling Physical Properties

### PhysicalProperties

The *PhysicalModel* property (or *PhysicalProperties* property for some embodiments) of Table 3 is defined in more detail as shown in Table 4.

**Table 4.**

| **Name** | **Type** | **Description** | **Required** |
|---|---|---|---|
| weight | number | User weight (kg). | No |
| bodyPartProperties | BodyPartProperties[1-*] | Physical properties for each part of the body. | No |
| skeletonLimits | SkeletonLimit[1-*] | Transform limits for each skeleton / skinning. | No |

The "bodyPartProperties" contains a list of properties for parts of the body.

The "skeletonLimits" contains a list of skeleton/skinning limits. Each skeleton/skinning must correspond to a skeleton or skinning in the scene description. A skeleton or skinning must (at least) contains a hierarchy of transformed nodes. For instance, in AJIF this corresponds to items in the "skeletons" root list, and in gITF this corresponds to an item in the "skins" root list.

The skeleton/skinning of each *SkeletonLimit* of "skeletonLimits" may be determined in two different ways. which depends on the "name" property of each *SkeletonLimit*. If oresent, the "name" property is used to retrieve the skeleton/limit with the same name. If "name" is not present, then the index of a *SkeletonLimit* in "skeletonLimits" determines the corresponding skeleton/skinning: in this case, the one with the same index is the corresponding one. For instance, if a *SkeletonLimit* with no "name" is the third item in "skeletonLimits", then the corresponding skeleton/skinning is the third one in the skeleton/skinning list.

### BodyPartProperties

The *BodyPartProperties* property of Table 4 is defined in more detail as shown in Table 5.

**Table 5.**

| **Name** | **Type** | **Description** | **Required** |
|---|---|---|---|
| name | string | Body part name. | No |
| type | string | Body part identifier. | Yes |
| node | integer | References a node in the "nodes" root list. | No |
| size | number[3] | Size of the smallest box which contains the body part (m). | No |
| volume | number | Body part volume (m3). | No |
| weight | number | Body part weight (kg). | No |

The "name" property, if present, is used to retrieve the corresponding body part.

The "type" property uniquely identifies the body part from a semantic point of vue. For instance, "urn:mpeg:avatar:part:hand:left" or "full_body/upper_body/arm leftlhand left" indicates that this body part is the left hand. These types may be defined by an application or a standard, for instance.

The "node" property is the index of an item in the "nodes" root list (both AJIF and glTF have this). The referenced node contains a model of the body part, for instance a 3D mesh.

The "size" property is the size of the smallest box which contains the body part. Values are (Length, Height, Depth).

The "volume" property is the volume of the body part.

The "weight" property is the weight of the body part.

### SkeletonLimit

The *SkeletonLimit* property of Table 4 is defined in more detail as shown in Table 6.

**Table 6.**

| **Name** | **Type** | **Description** | **Required** |
|---|---|---|---|
| name | string | Skeleton name | No |
| jointLimits | JointLimit[1-*] | Transform limits for each joint of the skeleton/skinning. | No |

The "name" property, if present, is used to retrieve the corresponding skeleton/skinning.

The "jointLimits" property contains the limits for each joint of the corresponding skeleton/skinning. The length "jointLimits" must be the same as the number of joints of the corresponding skeleton/skinning.

### JointLimit

The *JointLimit* property of Table 6 is defined in more detail as shown in Table 7.

**Table 7.**

| **Name** | **Type** | **Description** | **Required** |
|---|---|---|---|
| scaleMin | number[3] | Minimum allowed scale. | No |
| scaleMax | number[3] | Maximum allowed scale. | No |
| rotationAxis | number[9] | Rotation axis (X, Y, Z). | No |
| rotationMin | number[3] | Minimum allowed rotation angles (radians). | No |
| rotationMax | number[3] | Maximum allowed rotation angles (radians). | No |
| translationMin | number[3] | Minimum allowed translation. | No |
| translationMax | number[3] | Maximum allowed translation. | No |

The "scaleMin" property, if present, defines the minimum scale factor along the X, Y and Z axis an application may use to transform the corresponding joint. For instance, if "scaleMin" is [1, 2, 3], then the scale factor for the X axis must not be less than 1, the scale factor for the Y axis must not be less than 2, and the scale factor for the Z axis must not be less than 3.

The "scaleMax" property, if present, defines the maximum scale factor along the X, Y and Z axes that an application may use to transform the corresponding joint. For instance, if "scaleMax" is [1, 2, 3], then the scale factor for the X axis must not be higher than 1, the scale factor for the Y axis must not be higher than 2, and the scale factor for the Z axis must not be higher than 3.

The "rotationAxis" property, if present, defines a local (X, Y, Z) coordinate system, relative to the joint coordinate system. This coordinate system is used to define the rotation limits defined by "rotationMin" and "rotationMax". If not defined, the (X, Y, Z) coordinate system used by "rotationMin" and "rotationMax" is ((1,0,0),(0,1,0),(0,0,1)).

The "rotationMin" property, if present, defines the minimum rotation angles (radians) along the three axes defined by "rotationAxis" that an application may use to transform the corresponding joint. For instance, if "rotationMin" is [-0.1, -1.0, 0.0], then the rotation angle along the X axis must be greater than or equal to -0.1, rotation angle along the Y axis must be greater than or equal to -1.0, and rotation angle along the Z axis must be greater than or equal to 0.0. Stated slightly differently, X must be greater than or equal to v1 (-0.1); Y must be greater than or equal to v2 (-1.0); and Z must be greater than or equal to v3 (0.0). The three axes are defined by «rotationAxis».

The "rotationMax" property, if present, defines the maximum rotation angles (radians) along the three axis defined by "rotationAxis" an application may use to transform the corresponding joint. For instance, if "rotationMax" is [0.1, 1.0, 0.0], then the rotation angle along the X axis must be less than or equal to 0.1, rotation angle along the Y axis must be less than or equal to 1.0, and rotation angle along the Z axis must be less than or equal to 0.0.

The "translationMin" property, if present, defines the minimum translation along the X, Y, and Z axes that an application may use to transform the corresponding joint. For instance, if "translationMin" is [1, 2, 3], then the translation for the X axis must be greater than or equal to 1, the translation for the Y axis must be greater than or equal to 2, and the translation for the Z axis must be greater than or equal to 3.

The "translationMax" property, if present, defines the maximum translation factor along the X, Y and Z axis an application may use to transform the corresponding joint. For instance, if "translationMax" is [1, 2, 3], then the translation factor for the X axis must be less than or equal to 1, the translation factor for the Y axis must be less than or equal to 2 and the translation factor for the Z axis must be less than or equal to 3.

### AJIF Example

Code Listing 1 shows an avatar encoded using the AJIF format.

| |
|---|
| ```
{
   "asset": {
     "version": "1.0",
     "copyright": "Interdigital R&D"
   },
   "metadata": {
     "physicalMesh": 26,
     "physicalSkeletons": [1],
     "physicalProperties": {
        "skeletonLimits": [
          {
             "jointLimits": [
               {
                 "scaleMin": [1, 1, 1],
                 "scaleMax": [1, 1, 1],
                 "rotationAxis": [1, 0, 0, 0, -1, 0, 0, 0, -1],
                 "rotationMin": [-0.1, 1.0, 0.0],
                 "rotationMax": [1.7, 2.0, 1.0],
                 "translationMin": [0, 0, 0],
                 "translationMax": [0, 0, 0]
               }, {
                  ... 24 joint limits ...
               }
             ]
          }
        ]
      }
   },
   "data": [...],
   "geometries": [...],
   "nodes": [
      {
        "mapping": "full_body",
        "geometry": 0
      }, {
        "children": [2],
        "mapping": "Armature",
        "rotation": [0.70710683, 0, 0, 0.70710671]
      }, {
        ... 24 nodes for the avatar model skeleton ...
      }, {
        "geometry": 1
      }, {
        "children": [28],
        "mapping": "Armature",
        "rotation": [0.70710683, 0, 0, 0.70710671]
      }, {
        ... 24 nodes for the body model skeleton ...
      }
   ] ,
   "skeletons": [
      {
        "root": 1,
        "joints": [1, 2, 3, 4, 5, 6, 7, 8, 9, 10, 11, 12, 13, 14, 15, 16, 17, 18,
 19, 20, 21, 22, 23, 24, 25]
      },
      {
        "root": 27,
        "joints": [28, 29, 30, 31, 32, 33, 34, 35, 36, 37, 38, 39, 40, 41, 42,
 43, 44, 45, 46, 47, 48, 49, 50, 51, 52]
``` |
| ```
      }
    ],
   "lods": [
      {
        "name": "main",
        "lod": 0,
        "mesh": 0,
        "skeletons": [0]
      }
   ]
 }
``` |

### Code Listing 1.

All content but the one in "metadata" is first parsed as defined in the '094 application. At this stage, there is a single avatar model for LOD 0, with a mesh (node 0) and a skeleton (skeleton 0). The parsing of "metadata" indicates that the mesh defined in node 26 is the user body ("physicalMesh" is 26). There is also a skeleton for the user body defined in the second skeleton ("physicalSkeleton" is 1). Finally, physical properties are defined in the "physicalProperties" property. This property defines the joint limits for each joint of the body skeleton. Only the limits of the first joint are presented in the example above. The other ones work the same way. The limits for the scale factor of the first joint are [1, 1, 1] ("scaleMin" and "scaleMax" are [1,1,1]), meaning that this joint cannot be scaled. The rotation axis are X=(1, 0, 0), Y=(0, -1, 0) and Z=(0, 0, -1) ("rotationAxis" is [1, 0, 0, 0, -1, 0, 0, 0, -1]), meaning that this joint may be rotated only along the axis (1, 0, 0) between -0.1 and 1.7, along the axis (0, -1, 0) between 1.0 and 2.0 and along the axis (0, 0, -1) between 0.0 and 1.0 ("rotationMin" is [-0.1, 1.0, 0.0] and "rotationMax" is [1.7, 2.0, 1.0]). The limits for the translation factor of the first joint are [0, 0, 0] ("translationMin" and "translationMax" are [0,0,0]), meaning that this joint cannot be translated.

### gITF Example

Code Listing 2 shows an avatar encoded using the glTF format:

| |
|---|
| ```
 {
   "asset": {
     "generator": "Interdigital R&D France, Video Lab, MetaVideo, Interactive
 Media, Immersive teleprescence",
     "version": "2.0"
   },
   "extensionsUsed": ["MPEG_node_avatar"],
   "accessors": [...],
   "bufferViews": [...],
   "buffers": [...],
   "meshes": [{
     "name": "avatar_body",
     "primitives": [{
        "attributes": {
          "POSITION": 0
        },
        "indices": 1
``` |
| ```
      } ]
   }, {
     "name": "physical_body",
     "primitives": [{
        "attributes": {
          "POSITION": 2
        },
        "indices": 3
      }]
   }],
   "nodes": [{
     "extensions": {
        "MPEG_node_avatar": {
          "isAvatar": true,
          "mappings": [{
             "node": 0,
             "path": "full_body"
          }],
          "type": "urn:mpeg:sd:2023:avatar",
          "physicalModel": 26
        }
      },
     "mesh": 0,
     "skin": 0
   }, {
     "children": [2],
     "name": "Armature",
     "rotation": [0.70710683, 0, 0, 0.70710671]
   }, {
      ... 24 nodes for the avatar model skeleton ...
   }, {
     "extensions": {
        "MPEG_node_avatar": {
          "isAvatar": false,
          "mappings": [{
             "node": 0,
             "path": "full_body"
          }],
          "type": "urn:mpeg:sd:2023:avatar",
          "physicalProperties": {
             "skeletonLimits": [
               {
                 "jointLimits": [
                    {
                      "scaleMin": [1, 1, 1],
                      "scaleMax": [1, 1, 1],
                      "rotationAxis": [1, 0, 0, 0, -1, 0, 0, 0, -1],
                      "rotationMin": [-0.1, 1.0, 0.0],
                      "rotationMax": [1.7, 2.0, 1.0],
                      "translationMin": [0, 0, 0],
                      "translationMax": [0, 0, 0]
                    }, {
                      ... 24 joint limits ...
                    }
                 ]
               }
             ]
          }
        }
      },
``` |
| ```
     "mesh": 1,
     "skin": 1
   }, {
     "children": [28],
     "name": "Armature",
     "rotation": [0.70710683, 0, 0, 0.70710671]
   }, {
      ... 24 nodes for the body model skeleton ...
   }],
   "skins": [
      {
        "joints": [1, 2, 3, 4, 5, 6, 7, 8, 9, 10, 11, 12, 13, 14, 15, 16, 17, 18,
 19, 20, 21, 22, 23, 24, 25]
      }, {
        "joints": [28, 29, 30, 31, 32, 33, 34, 35, 36, 37, 38, 39, 40, 41, 42,
 43, 44, 45, 46, 47, 48, 49, 50, 51, 52]
      }
   ] ,
   "scene": 0,
   "scenes": [{
     "nodes": [0, 1]
   } ]
 }
``` |

### Code Listing 2.

For some embodiments, the glTF parser first loads all the content except that of the MPEG_node_avatar extension. The process decodes the MPEG_node_avatar content found in the first node. For this example, the first node indicates that the node is an avatar ("isAvatar" is true); that the type is the standard one ("type" is "urn:mpeg:sd:2023:avatar"); and that there is one part: the full body ("mappings" property). There is a corresponding physical model in node 26 ("physicalModel" is 26). The avatar model has a geometry ("mesh" is 0) and a skin ("skin" is 0).

Next, the process decodes the MPEG_node_avatar content found in the node 26. This one is not an avatar ("isAvatar" is false); the type is the standard one ("type" is "urn:mpeg:sd:2023:avatar"); and there is one part: the full body ("mappings" property). The body model has its own geometry ("mesh" is 1) and skin ("skin" is 1). Physical properties are defined in the "physicalProperties" property. The body model defines the joint limits for each joint of the body skeleton. Only the limits of the first joint are presented in the example above: The other ones work the same way. The limits for the scale factor of the first joint are [1, 1, 1] ("scaleMin" and "scaleMax" are [1,1,1]), meaning that this joint cannot be scaled. The rotation axes are X=(1, 0, 0), Y=(0, -1, 0) and Z=(0, 0, -1) ("rotationAxis" is [1, 0, 0, 0, -1, 0, 0, 0, -1]), meaning that this joint may be rotated only along the X axis (1, 0, 0) between -0.1 and 1.7, along the Y axis (0, -1, 0) between 1.0 and 2.0 and along the Z axis (0, 0, -1) between 0.0 and 1.0. The parameter "rotationMin" is [-0.1, 1.0, 0.0], and the parameter "rotationMax" is [1.7, 2.0, 1.0]. The limits for the translation factor of the first joint are [0, 0, 0]. The parameters "translationMin" and "translationMax" are [0,0,0], meaning that this joint cannot be translated.

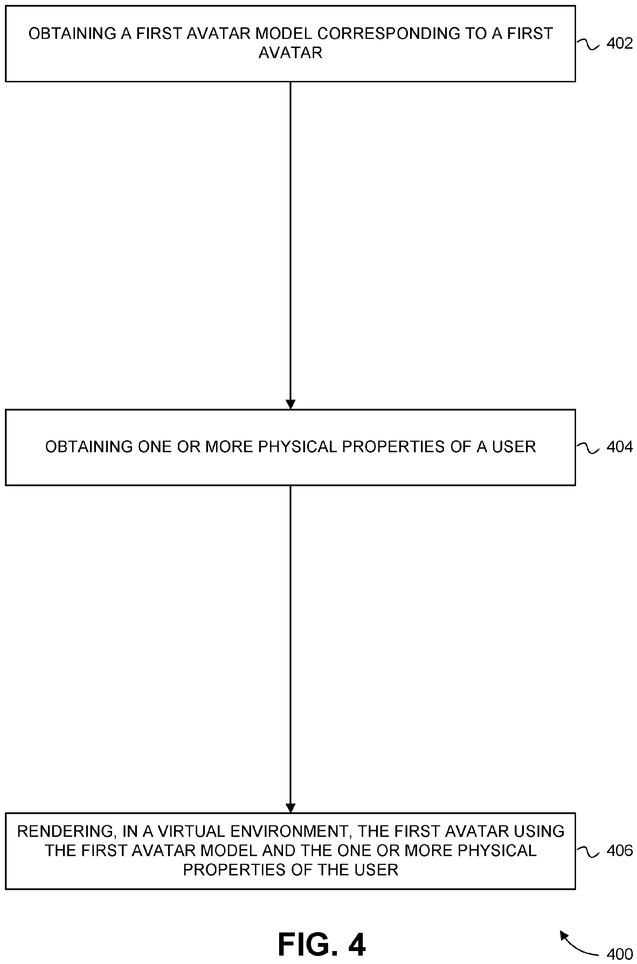

FIG. 4 is a flowchart illustrating an example process for rendering physical properties of an avatar according to some embodiments. For some embodiments, an example process 400 may include obtaining 402 a first avatar model corresponding to a first avatar. For some embodiments, the example process 400 may further include obtaining 404 physical properties of a user. For some embodiments, the example process 400 may further include rendering 406, in a virtual environment, the first avatar using the first avatar model and the one or more physical properties of the user.

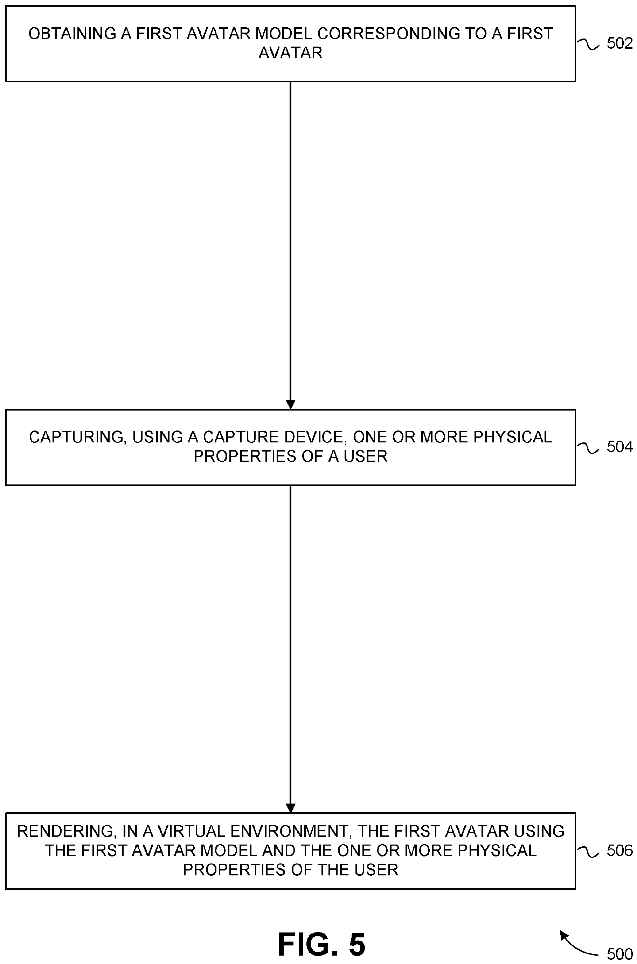

FIG. 5 is a flowchart illustrating an example process for capturing physical properties of an avatar according to some embodiments. For some embodiments, an example process 500 may include obtaining 502 a first avatar model corresponding to a first avatar. For some embodiments, the example process 500 may further include capturing 504, using a capture device, one or more physical properties of a user. For some embodiments, the example process 500 may further include rendering 506, in a virtual environment, the first avatar using the first avatar model and the one or more physical properties of the user.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a first avatar model corresponding to a first avatar; obtaining one or more physical properties of a user; and rendering, in a virtual environment, the first avatar using the first avatar model and the one or more physical properties of the user.

Some embodiments of the example method may further include calibrating a capture device using the physical properties and the first avatar model.

For some embodiments of the example method, obtaining physical properties of the user comprises capturing, using a capture device, at least one of the physical properties of the user.

Some embodiments of the example method may further include obtaining a mapping of physical properties of the user to the first avatar, wherein rendering the first avatar further uses the mapping of physical properties.

Some embodiments of the example method may further include obtaining a body model corresponding to the user, wherein rendering the first avatar further uses the body model.

Some embodiments of the example method may further include: obtaining a second avatar model corresponding to a second avatar; and rendering, in a virtual environment, the second avatar using the second avatar model and the body model.

Some embodiments of the example method may further include: obtaining a first set of connection data correlating the first avatar model to the body model; and obtaining a second set of connection data correlating the second avatar model to the body model, wherein rendering the first avatar further uses the first connection data, and wherein rendering the second avatar further uses the second connection data.

For some embodiments of the example method, the physical properties of the body model comprise at least one of weight and body mass of at least one body part of the user.

For some embodiments of the example method, the physical properties of the body model comprise a physical body property of at least one body part of the user.

For some embodiments of the example method, the physical properties of the body model comprise a skeletal limit of at least one body part of the user.

For some embodiments of the example method, the physical properties of the body model comprise a joint limit of at least one body joint of the user.

For some embodiments of the example method, the physical properties of the body model comprise a translation limit of at least one body part of the user.

For some embodiments of the example method, the physical properties of the body model comprise a scale limit of at least one body part of the user.

For some embodiments of the example method, at least one of the first avatar model and the second avatar model comolies with at least one of the group of formats consisting of Avatar JSON Interchange File (AJIF), Graphics Library Transmission Format (gITF), Universal Scene Description (USD), Filmbox (FBX), Polygon File Format (PLY), Wavefront Object (OBJ), DNA, and an MPEG_node_avatar-based format.

An example apparatus in accordance with some embodiments may include: a processor; and a memory storing instructions operative, when executed by the processor, to cause the apparatus to perform any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a first avatar model corresponding to a first avatar;
obtaining one or more physical properties of a user; and
rendering, in a virtual environment, the first avatar using the first avatar model and the one or more physical properties of the user.

2. The method of claim 1, further comprising calibrating a capture device using the physical properties and the first avatar model.

3. The method of claim 1, wherein obtaining physical properties of the user comprises capturing, using a capture device, at least one of the physical properties of the user.

4. The method of any one of claims 1-3, further comprising:
obtaining a mapping of physical properties of the user to the first avatar,
wherein rendering the first avatar further uses the mapping of physical properties.

5. The method of any one of claims 1-3, further comprising:
obtaining a body model corresponding to the user,
wherein rendering the first avatar further uses the body model.

6. The method of any one of claims 1-5, further comprising:
obtaining a second avatar model corresponding to a second avatar; and
rendering, in a virtual environment, the second avatar using the second avatar model and the body model.

7. The method of claim 6, further comprising:
obtaining a first set of connection data correlating the first avatar model to the body model; and
obtaining a second set of connection data correlating the second avatar model to the body model,
wherein rendering the first avatar further uses the first connection data, and
wherein rendering the second avatar further uses the second connection data.

8. The method of any one of claims 5-7, wherein the physical properties of the body model comprise at least one of weight and body mass of at least one body part of the user.

9. The method of any one of claims 5-8, wherein the physical properties of the body model comprise a physical body property of at least one body part of the user.

10. The method of any one of claims 5-9, wherein the physical properties of the body model comprise a skeletal limit of at least one body part of the user.

11. The method of any one of claims 5-10, wherein the physical properties of the body model comprise a joint limit of at least one body joint of the user.

12. The method of any one of claims 5-11, wherein the physical properties of the body model comprise a translation limit of at least one body part of the user.

13. The method of any one of claims 5-12, wherein the physical properties of the body model comprise a scale limit of at least one body part of the user.

14. The method of any one of claims 1-13, wherein at least one of the first avatar model and the second avatar model complies with at least one of the group of formats consisting of Avatar JSON Interchange File (AJIF), Graphics Library Transmission Format (gITF), Universal Scene Description (USD), Filmbox (FBX), Polygon File Format (PLY), Wavefront Object (OBJ), DNA, and an MPEG_node_avatar-based format.

15. An apparatus comprising:
a processor; and
a memory storing instructions operative, when executed by the processor, to cause the apparatus to perform the method of any one of claims 1 through 14.
